# EUROPEAN PATENT APPLICATION

(11) **EP 1 026 642 A1**
(43) Date of publication of application: **09.08.2000**
(21) Application number: 00200310.1
(22) Date of filing: 31.01.2000
(51) Int. Cl.: G07F 17/40, G07D 11/00, G07F 7/00

(54) **Interactive station for charity fund collection**

(30) Priority: 03.02.1999 IT MI990201
(71) Applicant: Comunicazioni Sociali s.r.l., 20123 Milano (IT)
(72) Inventor: Soldani, Riccardo, 27043 Broni (PV) (IT)
(74) Representative: Mittler, Enrico

(57) **Abstract**

An interactive station for charity find collection comprises a base structure (1) suitable to operate as a safety container for the money being collected, means (5, 6, 10) for the introduction of money in said container, an electronic processor (13), a totaliser (17) for the counting of the collected money and a display (8) for the visualisation of the amount that has been counted by the totaliser, of images relative to the destination that is expected for the collected money and of thanks messages for the donated amount. The aforesaid means (5, 6, 10) for the introduction of money can comprise a coin receiver (5) and/ or a banknote acceptor-feed (6), as also a cash card and/ or credit card acceptor (10), a keyboard (11) and a modem (19). In addition a printer (18) and a slot (9) for the delivering of a receipt or of a prize ticket can be provided.

## Description

The present invention concerns an interactive station devoted to the collection of charity funds.

The increasing demand for funds for the support of charitable works leads toward the creation of modern and effective tools that on one hand induce donors to make their donation and on the other hand give the maximum guarantees that the donation gets to destination and is not instead object of thefts, frauds and more.

An object of the present invention is to make available to the public an equipment for the collection of funds that, by taking advantage of the possibilities that are offered by modern electronic technology and computer science, gives the donor the possibility of make a donation after due consideration and with the certainty that this reaches the desirable recipient.

Another object is to realise an equipment for the collection of funds that is capable to receive the donations in a plurality of forms, such as coins, banknotes, cash cards, credit cards and so on.

Another object again is to realise an equipment for the collection of funds that is capable to provide the donor with an indication of the total amount of the donations that have been received up to that moment.

Another object again is to realise an equipment for the collection of funds that is capable to provide the donor with a receipt for the amount that is given.

An additional object is to realise an equipment for the collection of funds that can be quickly set up in any environment, whether an open space or a hospital, a school, a church, an airport, a stadium, a public office and son on.

In view of such objects, according to the present invention, an interactive station for the collection of charity fund has been realised, that is characterized in that it comprises a base structure that is suitable to operate as a safety container for the collected money, means for the introduction of money in said container, an electronic processor, a totaliser for the counting of the money that has been collected and a display for the visualisation of the amount counted by the totaliser, of images concerning the destination expected for the collected money and of thank messages for the lodged amount.

Preferably, said means for the introduction of money comprise a coin acceptor and a banknote acceptor-feed for any type of currency, that are adequately provided with identification and counting means. In addition an acceptor for cash cards and/ or credit cards can be provided that is combined with a keyboard for the typing of the amount that is being donated and of the secret pin code for the identification of the cash card or credit card holder and with a modem for the telematic networking to a bank and other similar stations. In addition a printer for the printing of a receipt for the remittance or of a prize-ticket and a slot for the issue of said receipt or of said ticket can be associated. A sound transmitter for the output of thank messages can be combined with the display.

These and other characteristics of the present invention will be made evident by the following detailed description of a possible embodiment thereof that is illustrated as a non limiting example in the enclosed drawings, in which:
Figure 1 shows a schematic representation of the mechanical structure of the interactive station according to the invention;
Figure 2 shows a blocks diagram of the electronic part of the interactive station according to the invention.

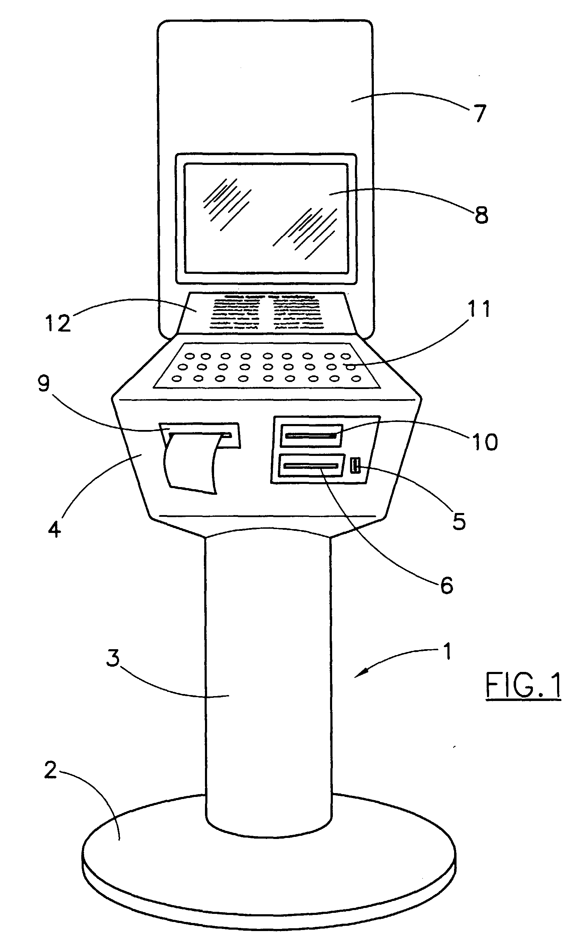

In its simplest and cheapest version an interactive station according to the invention comprises a base structure, indicated by 1 in Figure 1, that is formed in such a way so as to constitute a safety container for the collected money. For example, the aforesaid supporting base can comprise a bearing pedal 2 with round shape and about one meter in diameter, profiled with cast iron or other anti-scratch material and without harmful or dangerous edges, and provided with holes for the fixing to ground, a cylindrical armour plated column 3 about one meter in height, made of cast iron or other material, with anti-forcing key locking or with encoded identification system, that is possibly completed with an anti-theft alarm system, and a safe for the collection of coins and banknotes inside, and a head 4 provided with a slot 5 for the introduction of coins and/ or a banknote acceptor-feed 6, that are both in communication with the aforesaid safe and provided with appropriate means for the identification and counting of the coins or banknotes that are being introduced.

Above the head a panel 7 is located and fixed to the base 1 that is suitable for the support of advertising material and/ or for the personalisation of the station, which panel incorporates a display 8 for the presentation of images of various kind as the total collected amount, the destination expected for the collected money and thanks messages for the amount donated, possibly combined with sound messages that are sent by an appropriate sound transmitter.

If wanted, the station can be completed with a slot 9 for the delivering of a receipt for the amount being donated, as also with an acceptor 10 of cash cards and credit cards and with an alphanumeric keyboard 11, possibly of a touch sensitive type.

In addition instructions 12 are provided to guide the donor in the correct use of the station.

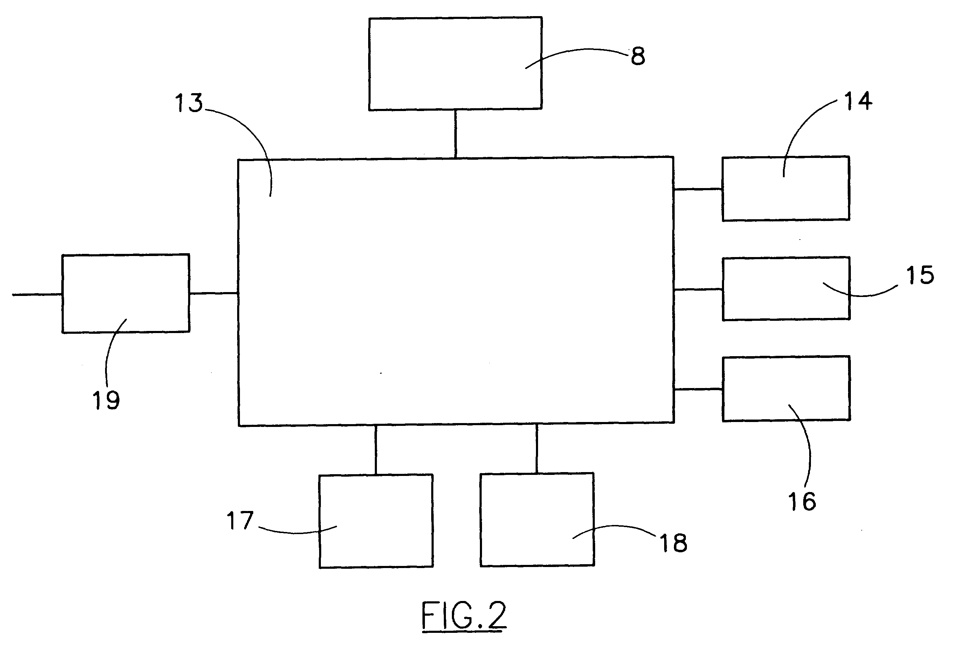

The electronic part, that is illustrated in Figure 2, comprises an electronic processor 13, adequately programmed and provided with a memory, that receives information from coin and banknote readers 14 and 15, respectively, and possibly from a cash card and credit card reader 16.

The electronic processor 13 controls in turn a totaliser 17 for the progressive count of the amount that is being collected and the display 8 and possibly a printer 18 for the printing of receipts, and in addition it is connectable with the central computer of a bank and with the processors of other similar stations by means of a modem 19.

The electronic processor 13 can consist of a computer with 16000 UART, 9600 bit, parallel serial accesses, that is provided with multimedia apparatus, CD ROM and sound card for sound effects, and memory base for films.

The display 8 can be a communication display with low radiation trinitron MPRII-TCO95 system.

The printer 18 can be an inkjet one for the writing on paper mediums with various formats with bi-directional compatible parallel interface.

The banknote reader 15 can comprise an infrared scanner with 9600 bit serial connection with a PLC interface for alphanumeric pulse count.

As already stated, in its simplest version the interactive station according to the invention provides a base structure 1 with the function of safety container, a slot 5 for the introduction of coins and/or a banknote acceptor-feed 6, a display 8, an electronic processor 13, a slot 5 with reader 14 for the introduction, the identification and the count of coins and/ or a banknote acceptor-feed 6 with reader 15 for the introduction, the identification and the count of banknotes that are introduced and a totaliser 17.

In this case a video message on the display 8, possibly accompanied by a sound message, invites to deposit a contribution in favour of a charity organisation. The donor inserts the coins or the banknotes in one of the slots that are provided, and the amount is counted and added to the totaliser 17, and the total appears on the display 8. A video/sound message thanks the donor and the station returns to the starting configuration.

If the interactive station is also provided with a printer 18 and with a slot 9 to issue receipts, the printing of a receipt reporting the amount donated the date and the time of the donation as well as the progressive number of the donation will be added to the operations listed above.

If as an alternative or in addition to the slot 5 and to the banknote acceptor-feed 6 with relative readers 14 and 15 the interactive station provides a credit card and/ or cash card reader 16, a keyboard 11 and a modem 19, the donor can use the relative card in the usual way, thus obtaining regular receipt for the remittance.

Naturally the ideal station is the one that, as illustrated in Figure 1, allows to carry out the donation in the highest number of ways (coins, banknotes, cash cards, credit cards) and provides for a receipt for the remittance.

All the configurations described above, if provided with printer, can be enabled for a prize contest. In this case, by the principle of the programmed randomness, the software of the electronic processor can assign a prize to the luckiest donors and determine the delivering of a ticket that is valid for the collection of the prize.

The interactive station according to the invention allows to devolve money for charity purpose to any non-profit corporate body, organisation or association, while guaranteeing a lot of advantages both to the donor as well as to the beneficiary.

The advantages for the donor are:
- convenience: the station, if positioned in a place with large crowds, allows the public to devolve their donation in a comfortable way, without having to go to a bank or a postal office;
- transparency: the donor has the certainty that the donation will reach the corporate body, organisation or association to which it is destined and through the totaliser can immediately verify the amount of the donation being given and the total sum that has been collected up to that moment;
- safety: the armour plated structure of the column that functions as a container for the money, together with the use of a special opening key or of a suitable encoded system and with the possible presence of an alarm system, makes the station theft proof;
- certification and tax deductibility: the station can possibly print and deliver a receipt that is valid for tax purposes;
- rewarded solidarity: the donation can be stimulated through a prize that is made available by the charity organisation or by a possible sponsor.

The advantages for the beneficiary on the other hand are:
- profitability: the use of personnel is not necessary; in addition the station is suitable to be sponsored by firms or private concerns that want to support the corporate charity body, organisation or association and they obtain in exchange the presentation of the name and/ or of the logotype of the sponsor and of a film with news on the activity of the same sponsor, possibly complete with news on public interest services (stock exchange lists, schedules and fares for railways and aeroplanes, discounts and other opportunities);
- transparency and safety: the beneficiary can know the total amount of the fund collection with certainty and keep the person (official or guard) that performs the collection of the cash under control; in addition he can be certain that no thefts of the hind collecting structure take place;
- control: owing to the totaliser and through the modem connection it is possible to know at any time, station by station and as a whole, the course of a fund collecting campaign; that favours the promotion of the same campaign, its correction if needed and the sensitising of the public even on short term objectives (for example, floods, earthquakes and other);
- spreading: an interactive station according to the invention can be located where the public can hardly be reached by the normal messages of a charity organisation, that can therefore increase their knowability and as a consequence also the range of the potential donors, both in Italy as well as in foreign countries;
- promotion: the display of the interactive station can not be limited to transmit the invitation to the public to make their donation (message that can also be launched by famous people) but it can also explain the finalities that are being carried out and the destination of the collected contributions in general or in the specific find collecting campaign under course; the output of guided information and selected through a touch sensitive system can also be provided;
- market research: by using a touch sensitive system it is possible to carry out a market research with guided answers both to the benefit of the charity organisation as well as of the sponsor.

## Claims

1. Interactive station for charity fund collection, characterized in that it comprises a base structure (1) suitable to operate as a safety container for the collected money, means (5, 6, 10) for the introduction of money in said container, an electronic processor (13), a totaliser (17) for the counting of the collected money and a display (8) for the visualisation of the amount counted by the totaliser, of images relative to the destination that is expected for the collected money and of thanks messages for the donated amount.

2. Interactive station according to claim 1, characterized in that said means (5, 6, 10) for the introduction of money comprise a coin receiver (5) provided with identification and counting means.

3. Interactive station according to claim 1, characterized in that said means (5, 6,10) for the introduction of money comprise a banknote acceptor-feed (6) provided with identification and counting means.

4. Interactive station according to claim 1, characterized in that said means (5, 6, 10) they for the introduction of money comprise an acceptor (10) of cash cards and/ or credit cards, a keyboard (11) for the typing of the amount that is being donated and of the secret code for the identification of the cash card or credit card holder and a modem (19) for the telematic networking to a bank and other similar stations.

5. Interactive station according to claim 1, characterized in that in addition it comprises a printer (18) for the printing of a receipt for the remittance and/ or of a prize-ticket and a slot (9) for the output of said receipt or said ticket.
